(19) Europäisches Patentamt
European Patent Office
Office européen des brevets

(11) **EP 4 664 417 A1**

(12) **EUROPEAN PATENT APPLICATION**

(43) Date of publication:
**17.12.2025 Bulletin 2025/51**

(21) Application number: **24181425.0**

(22) Date of filing: **11.06.2024**

(51) International Patent Classification (IPC):
***G06V 10/776*** *(2022.01)*

(52) Cooperative Patent Classification (CPC):
**G06V 10/776**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Milestone Systems A/S**
**2605 Brøndby (DK)**

(72) Inventors:
• **NASROLLAHI, Kamal**
**2605 Brøndby (DK)**

• **BOZYIL, Rohat**
**2605 Brøndby (DK)**
• **SENENT, Alejandro Martinez**
**2605 Brøndby (DK)**
• **NORTON, Barry**
**2605 Brøndby (DK)**
• **NAVARRO, Fulgencio**
**2605 Brøndby (DK)**

(74) Representative: **Canon Europe Limited**
**European Intellectual Property Group**
**4 Roundwood Avenue**
**Stockley Park**
**Uxbridge UB11 1AF (GB)**

(54) **A SYSTEM AND METHOD FOR TESTING BIAS OF A MACHINE LEARNING SYSTEM**

(57)  A system for testing bias of a machine learning system for enhancement or identification of objects and/or activities in image data comprises a test image generator (20) including an input means configured to receive an input from a source (10), and attribute variation means configured to process the input to generate a plurality of test images (30) in which a visible attribute of a subject is different in each of the test images. The system further includes a testing module (40) configured to input each of the test images to the machine learning system and output a result for each test image, and a bias analysis module (50) configured to compare the result with an expected result for each test image, and generate performance scores indicating the performance of the machine learning system in different categories of the visible attribute

FIGURE 2

**Description**

**Technical Field**

The present invention relates to a system, method and computer program for testing bias of a machine learning system for enhancement or identification of objects and/or activities in image data.

**Background**

Many analytics programs that utilise machine learning models are available which can identify specific objects or activity in image data. Such programs are often provided as software modules that are used particularly in video surveillance to identify specific objects or activity in video surveillance data and can be provided in a video management system (VMS) that processes data from multiple cameras, or can be provided in the cameras themselves ("on edge"). Analytics modules identify objects or activity in the video data from the camera, and generate metadata describing the detected objects or activity and indicating a time and position in the frame (eg bounding box coordinates) where the objects or activity have been detected. The metadata may be stored on a recording server with the video data, and can be used by a client device to generate alerts, provide visual indications on live or recorded video or can be used to search stored video data.

An example of object detection would be a human detection algorithm, which can identify humans in the video data and also particular characteristics of the identified humans such as colour of clothing or particular clothing items (eg wearing a hat), or posture (sitting, standing, lying). Another example would be vehicle detection which can identify vehicles in the video data and also particular characteristics such as model, colour and license plate.

Other video analytics software modules can detect and identify activities or behaviour. An example would be a video analytics module used to analyse video data from a shopping mall which can identify suspicious behaviour such as loitering, shoplifting or pickpocketing. Another example would be a video analytics module used to analyse video data in a hospital or care home environment that can identify a patient in distress, for example someone falling over. Another example would be a video analytics module used for traffic monitoring which can detect illegal traffic manoeuvres or traffic accidents.

A video surveillance camera or VMS can be loaded with whichever video analytics modules are appropriate for its installation environment or purpose. Manufacturers of VMS systems or cameras may allow users to install modules provided by third parties as "plug-ins" to the VMS software, or the camera operating system.

With any type of AI based object or activity recognition, there may be bias, in that the program may be better at recognising some types of objects than others. Such bias might be introduced as a result of the training dataset used to train the machine learning algorithm. For example, a module for vehicle recognition might be better at recognising white or silver cars than pink or black cars, or may be better at recognising more commonplace models of cars rather than more unusual models.

In programs used for people recognition, there is increasing concern regarding bias based on attributes such as skin-tone, age, gender, body mass etc..

Image enhancement systems also utilize machine learning models such as super-resolution, to restore detail in low resolution images to generate higher resolution images. These are trained using pairs of test images which might be an original image and a downsampled version. Super-resolution models can also be subject to bias.

Computer simulated environments have been used for training machine learning models for video surveillance, for example the SynCity simulator provided by Cvedia, or simulations generated by Unity. These companies work closely with clients to produce 3D models and environments that resemble the real-life ones. These environments are then used to generate training data for the real-life deep learning solutions.

**Summary of the Invention**

The present invention provides a system for testing bias of a machine learning system for enhancement or identification of objects and/or activities in image data according to claim 1. The present invention also provides a computer implemented method of testing bias of a machine learning system for enhancement or identification of objects and/or activities in image data according to claim 9 and a computer program for carrying out the method according to claim 15.

Preferred aspects are set out in claims 2 to 8, and 10 to 14.

The aim of the invention is to provide a system that can be used to assess bias of the output of a machine learning system based on a chosen visual attribute, or set of visual attributes.

The present invention creates test datasets through synthesis (eg using a generative AI model or a game engine) based on an input. If the synthesis is carried out by a generative AI model, the input may be an image which may be a synthesised image or a manual camera capture, or an image generated by a game engine. The input image is usually not included in the set of test images, as it is of a different domain than the augmented images. If the synthesis is carried out using a game engine, the input will be a source game engine scene, which is a virtual staged space containing different parameterized objects (human, animal, creature, furniture, building, etc.) captured by a virtual camera.

The test image generator also receives a user input which determines which visual attribute to vary. If the synthesis is carried out by a generative AI model, this would be a prompt. If the synthesis is carried out by a game engine the user input would be a specific parameter within the scene to adjust.

The test dataset can be made specific to the type of machine learning system being tested for, such as face recognition, object detection, etc.. by selection of the input. For example, if the machine learning system being tested is a fall detection program, an image of a person who has fallen over can be used. The test dataset can be made specific to the visual attribute for which bias is to be tested, by manipulating the input image to vary that visual attribute. So, for example, the input image could be processed to vary the perceived age of the person, or the skin tone.

The same input image could be processed in different ways to augment different visually distinguishable attributes of characters in the images, such as skin-tone, age, body mass, height, etc. and result in different subsets of augmented images, each of which can be used to assess bias based on different attributes.

The invention may also be applied to a non human object detection program, for example a vehicle identification program may be tested for bias based on colour by taking an input image of a particular model of car and processing it to vary the colour and obtain a set of test images in which the same car is a different colour in each test image.

The present invention provides a means by which a VMS or camera manufacturer can test analytics programs provided by third parties for bias and decide which solutions to provide or recommend to customers. The VMS or camera manufacturer may also provide performance scores indicating the degree of bias of various third party solutions to customers so their customers can make informed choices regarding which "plug ins" to use.

The invention may also be applied to image enhancement systems based on machine learning models, such as super resolution models.

## Brief Description of the Drawings

Embodiments of the invention will now be described, with reference to the accompanying drawings, in which:

Figure 1 shows a video surveillance system;
Figure 2 is a block diagram of a system for testing bias of a machine learning system;
Figure 3 illustrates the generation of a set of test images;
Figure 4 illustrates a set of test images with variations in two visible attributes; and
Figures 5A and 5B show confusion matrices for test images with variations in two visible attributes.

## Detailed Description of the Embodiments

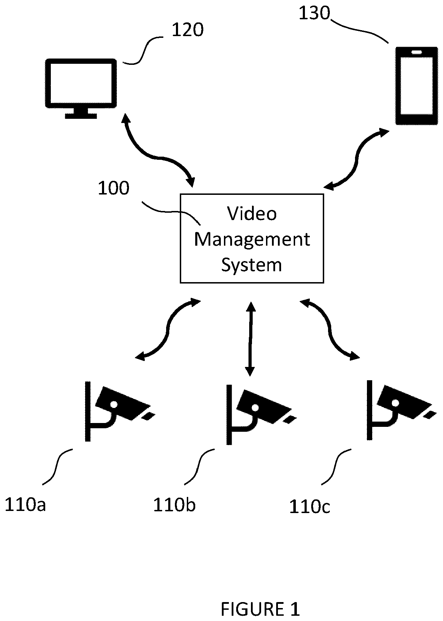

Figure 1 shows an example of a video surveillance system. The system comprises a video management system (VMS) 100, a plurality of video surveillance cameras 110a, 110b, 110c and at least one operator client 120 and/or a mobile client 130.

The VMS 100 may include various servers such as a management server, a recording server, an analytics server and a mobile server. Further servers may also be included in the VMS, such as further recording servers or archive servers. The VMS 100 may be an "on premises" system or a cloud-based system.

The plurality of video surveillance cameras 110a, 110b, 110c send video data as a plurality of video data streams to the VMS 100 where it may be stored on a recording server (or multiple recording servers). The operator client 120 is a fixed terminal which provides an interface via which an operator can view video data live from the cameras 110a, 110b, 110c, or recorded video data from a recording server of the VMS 100.

The VMS 100 can run analytics software for image analysis, for example software including machine learning algorithms for object or activity detection. The analytics software may generate metadata which is added to the video data and which describes objects and/or activities which are identified in the video data.

Video analytics software modules may also run on processors in the cameras 110a, 110b, 110c. In particular, a camera may include a processor running a video analytics module including a machine learning algorithm for identification of objects or activities. The video analytics module generates metadata which is associated with the video data stream and defines where in a frame an object or activity has been detected, which may be in the form of coordinates defining a bounding box. The metadata may also define what type of object or activity has been detected eg person, car, dog, bicycle, and/or characteristics of the object (eg colour, speed of movement etc). The metadata is sent to the VMS 100 and stored with the video data and may be transferred to the operator client 120 or mobile client 130 with or without its associated video data. A search facility of the operator client 120 allows a user to look for a specific object, activity or combination of objects and/or activities by searching the metadata. Metadata can also be used to provide alerts to an operator to alert the operator of objects or activities in the video while the operator is viewing video in real time.

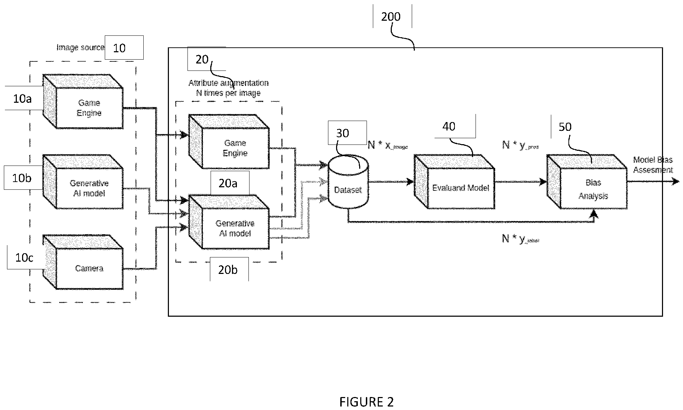

Figure 2 is a block diagram illustrating a system 200 for testing bias of an analytics program for identification of objects and/or activities in image data. In this example, although the program is a video analytics program that is typically used on frames of video data, the input image and test images are still images. More complex video analytics might utilize temporal information from a sequence of frames, but the invention can be adapted to use video test data. For example, augmenting a characteristic in a game engine, would result in a consistent characteristic change across the whole video.

The system 200 includes a test image generator 20 that receives an input image from an image source 10. The image source 10 may be a game engine 10a, a generative AI model 10b or a camera 10c. If the image source is a game engine 10a, such as Unity® or Unreal Engine ®, or a generative AI model 10b then the input image is a synthetic image.

The test image generator 20 may be a game engine 20a or a generative AI model 20b. If the test image generator is a game engine 20a, then it will receive an input scene from a game engine 10a which may be the same or different to the game engine 20a. If the test image generator is a generative AI model 20b, then the input image may be from a game engine 10a, a generative AI model 10b (which may be the same as generative AI model 20b) or a camera 10c.

The test image generator 20 includes attribute variation means configured to process the input image to vary a visible attribute of a subject of the input image to generate a test dataset 30 comprising a plurality of test images in which the visible attribute is different in each of the test images. The test dataset 30 also includes ground truth data, which may be added by an operator, which indicates an expected result for each test image. For example, if the analytics program to be tested is a fall detection program, the ground truth data may indicate whether a fall has taken place or not. If the analytics program to be tested is a vehicle identification program, the ground truth data may indicate the type or model of vehicle.

The system 200 further includes a testing module 40 configured to input each of the test images of the test dataset 30 to the analytics program to be tested and output an identification result for each test image. The identification results are input to a bias analysis module 50 together with the ground truth data from the test dataset 20. The bias analysis module 50 compares the identification result with an expected result for each test image, and generates performance scores indicating the performance of the analytics program in different categories of the visible attribute.

Therefore, the input images may be "real" images (ie from a camera) or may originate from synthesis and can either be produced from rendered scenes from game engines (Unreal Engine, Unity, etc.) or from generative modelling approaches (diffusion, GANs, etc.). The augmentation is based on generative models that augment either real, generated or rendered images, or new renderings of game engine scenes where character attributes have been modified. This method is not limited to the analysis of character bias, but also encompasses the analysis of having a controlled change of any attribute in a set of images, such as augmentation of any relevant object's color or size, environment illumination augmentation, perspective augmentation, etc.

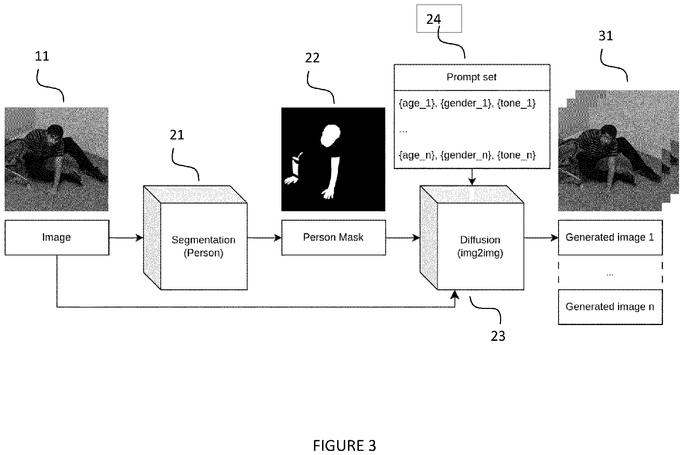

Figure 3 illustrates in more detail how the test images may be generated by a generative AI model 20a as the test image generator 20. In this example, the input image 11 is an image taken by a camera, and this is input to a segmentation module 21 to isolate the person from the image and generate a mask 22. The mask 22 and the input image 11 are input to a diffusion model 23, which receives a set of prompts 24 which instruct the diffusion model 23 to make controlled augmentations of the input image 11 to change selected visual characteristics and output a set of n test images 31 in which the visual characteristics are varied.

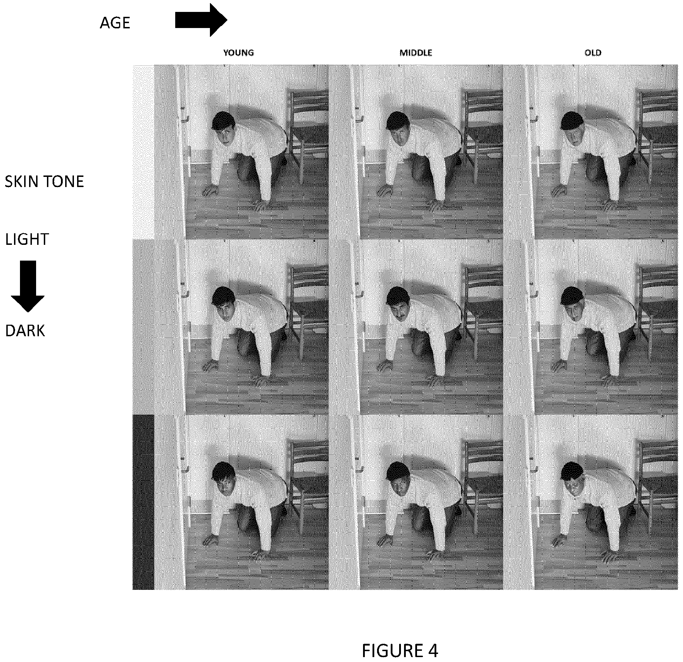

Figure 4 shows a set of test images 31 which have been generated from an input image and processed to vary visual characteristics to vary the age of the subject and the skin tone of the subject. The test images 31 can be used to assess a fall detection program for bias based on age and skin tone. In the test images 31, the age of the subject increases from left to right and the skin tone darkens from top to bottom.

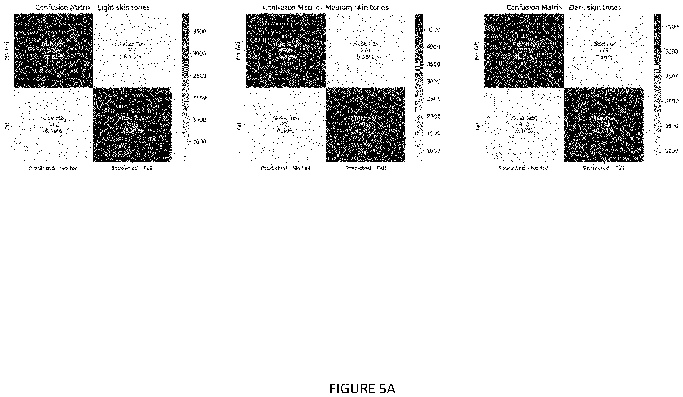

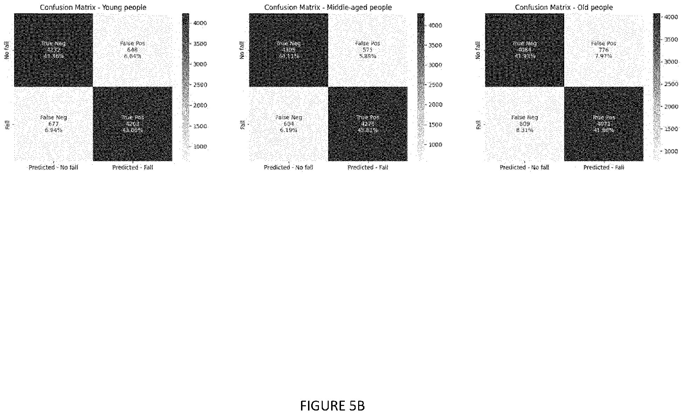

Figures 5A and 5B show results in the form of confusion matrices for the sets of images with different skin tones and ages respectively.

Figure 5A shows three confusion matrices for three categories of skin tone, light, medium and dark. The visual attribute that has been varied is skin tone, and each confusion matrix shows the performance in one category. Each confusion matrix has the prediction result of the fall detection program (no fall or fall) ie the identification result on the x axis, and the expected result (fall or no fall) from the ground truth data on the y axis, and shows the percentage of the total outcomes in each quadrant.

From these results, four measures of Accuracy, Precision, Recall and F1-Score can be calculated.

TP (true positive): Predicts (fall) correctly
FP (false positive): Predicts (fall) incorrectly
FN (false negative): Predicts (no fall) incorrectly
TN (true negative): Predicts (no fall) correctly

Accuracy: Out of all predictions, how many are correct.

$$Accuracy = \frac{TP + TN}{TP + FP + FN + TN}$$

Precision: Out of all positive predictions, how many are correct.

$$Precision = \frac{TP}{TP + FP}$$

Recall: Out of all positive cases, how many are predicted correctly.

$$Recall = \frac{TP}{TP + FN}$$

F1: A class balanced accuracy score.

$$F1 = \frac{2TP}{2TP + FP + FN}$$

| Skin Tone | Light | Medium | Dark |
|---|---|---|---|
| Accuracy | 87.76% | 87.63% | 82.34% |
| Precision | 87.71% | 87.94% | 82.73% |
| Recall | 87.81% | 87.21% | 81.84% |
| F1-score | 87.76% | 87.57% | 82.28% |

Figure 5B shows three confusion matrices for three categories of age, young, middle and old. In this example, several visible attributes have been varied (hair colour, skin texture etc) which all contribute to the aging of the subject. Each confusion matrix has the prediction of the fall detection program (no fall or fall) ie the identification result on the x axis, and the expected result (fall or no fall) from the ground truth data on the y axis, and shows the percentage of the total outcomes in each quadrant.

As above, four measures of Accuracy, Precision, Recall and F1-Score can be calculated.

| Age | Young | Middle | Old |
|---|---|---|---|
| Accuracy | 86.42% | 87.92% | 83.73% |
| Precision | 86.64% | 88.14% | 83.99% |
| Recall | 86.12% | 87.62% | 83.42% |
| F1-score | 86.38% | 87.88% | 83.71% |

It can be seen from the above results that the fall detection program has a slight bias towards incorrect results with dark skin tones and with the oldest age category.

The present invention provides a system and method for testing bias. The results of the analysis can be used by VMS and camera manufacturers, and presented to their customers and technology partners, to enable all parties to make informed decisions:

- VMS and camera manufacturers can decide whether a given solution should be integrated with the VMS/camera.
- Customers can decide whether the level of bias of a "plug in" solution is within an acceptable range for them to use.
- Technology partners who develop analytics programs can decide to address the specific bias issues their solution has.

In an alternative embodiment, bias of a machine learning system for image enhancement such as a super resolution model may be tested for bias. Test images are generated in the same way as described above, with the variation of a visible attribute.

A super-resolution model enhances the resolution of images by restoring fine details, lost due to information degradation, like downsampling. Given a degraded version of an image, the model will try to reproduce the original image.

The model can be trained by optimizing for the minimization of the calculated difference (loss function like MSE, MAE, etc.) between the original images and the reconstructed image from the model. An image enhancement system, would be given a set of degraded images with augmented visual attributes, and produce a reconstruction of those images. The bias analysis module generates a performance score based on the calculated quality of the image enhancement (evaluation metrics like PSMR, SSIM, etc.) for different categories of the visible attribute. If there are score differences for one category of a visible attribute over another, then that could indicate that the system is biased.

Some embodiments of the invention may be implemented as a recording medium including a computer-readable instruction such as a computer-executable program module. The computer-readable recording medium may be an arbitrary available medium accessible by a computer, and examples thereof include all volatile and non-volatile media and separable and non-separable media. Further, examples of the computer-readable recording medium may include a computer storage medium and a communication medium. Examples of the computer storage medium include all volatile and non-volatile media and separable and non-separable media, which have been implemented by an arbitrary method or technology, for storing information such as computer-readable instructions, data structures, program modules, and other data. The communication medium generally includes a computer-readable instruction, a data structure, a program module, other data of a modulated data signal, or another transmission mechanism, and an example thereof includes an arbitrary information transmission medium.,

While the disclosure has been particularly shown and described with reference to embodiments thereof, it will be understood by one of ordinary skill in the art that various changes in form and details may be made therein without departing from the scope of the disclosure as defined by the following claims. Hence, it will be understood that the embodiments described above are not limiting of the scope of the disclosure.

The scope of the disclosure is indicated by the claims rather than by the detailed description of the disclosure, and it should be understood that the claims and all modifications or modified forms drawn from the concept of the claims are included in the scope of the disclosure.

## Claims

1. A system for testing bias of a machine learning system for enhancement or identification of objects and/or activities in image data comprising:

   a test image generator (20) comprising:

   input means configured to receive an input from a source (10); and
   attribute variation means configured to process the input to generate a plurality of test images (30) in which a visible attribute of a subject is different in each of the test images;

   a testing module (40) configured to input each of the test images to the machine learning system and output a result for each test image;
   a bias analysis module (50) configured to compare the result with an expected result for each test image, and generate performance scores indicating the performance of the machine learning system in different categories of the visible attribute.

2. A system according to claim 1, wherein the bias analysis module is configured to generate the performance scores by comparing results with expected results for test images in which the same visible attribute is varied and generated from a plurality of different inputs.

3. A system according to claim 1 or 2, wherein the attribute variation means is a generative AI model.

4. A system according to any one of the preceding claims, wherein the input is an input image and the source is a game engine, a generative AI model or a camera.

5. A system according to claim 1 or 2, wherein the attribute variation means is a game engine and the input is an input scene.

6. A system according to any one of the preceding claims, wherein the machine learning sytem is a video analytics program for identification of objects and/or activities in video data.

7. A system according to any one of the preceding claims, wherein the subject of the test images is a human and the visible attribute is a visible attribute of the human.

8. A system according to any one of the preceding claims, wherein the visible attribute is an attribute related to age, gender or race.

9. A computer implemented method of testing bias of a machine learning system for enhancement or identification of objects and/or activities in image data comprising:

generating a plurality of test images by:

receiving an input from a source; and
generate a plurality of test images in which a visible attribute of a subject is different in each of the test images based on the input;

inputting each of the test images to the machine learning system and outputting a result for each test image;
comparing the result with an expected result for each test image, and generating performance scores indicating the performance of the machine learning system in different categories of the visible attribute.

10. A method according to claim 9, wherein the performance scores are generated by comparing results with expected results for test images in which the same visible attribute is varied and generated from a plurality of different inputs.

11. A method according to claim 9 or 10, wherein the test images are generated by a generative AI model.

12. A method according to any one of claims 9 to 11, wherein the input is an input image and the source is a game engine, a generative AI model or a camera.

13. A method according to claim 9 or 10, wherein the test images are generated by a game engine.

14. A method according to any one of claims 9 to 13, wherein the subject of the test images is a human and the visible attribute is an attribute related to age, gender or race.

15. A computer program comprising instructions which, when the program is execute by a computer, cause the computer to carry out the method of any one of claims 9 to 14.

FIGURE 1

FIGURE 2

FIGURE 3

AGE

YOUNG          MIDDLE          OLD

SKIN TONE

LIGHT

DARK

FIGURE 4

Confusion Matrix - Light skin tones

Confusion Matrix - Medium skin tones

Confusion Matrix - Dark skin tones

FIGURE 5A

FIGURE 5B

Europäisches Patentamt
European Patent Office
Office européen des brevets

# EUROPEAN SEARCH REPORT

**Application Number**

EP 24 18 1425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BALAKRISHNAN GUHA ET AL: "Towards Causal Benchmarking of Bias in Face Analysis Algorithms", 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, vol. 32, no. 504473, 23 August 2020 (2020-08-23), pages 547-563, XP047591597, DOI: 10.1007/978-3-030-58523-5_32 ISBN: 978-3-030-58523-5 * title, abstract, sections 3.1-3.3, 4.4, figures 2-6 * | 1-15 | INV. G06V10/776 |
| A | INDU JOSHI ET AL: "Synthetic Data in Human Analysis: A Survey", ARXIV.ORG, CORNELL UNIVERSITY LIBRARY, 201 OLIN LIBRARY CORNELL UNIVERSITY ITHACA, NY 14853, 19 August 2022 (2022-08-19), XP091298053, * section 2.4 and Table 2 * | 4,5,12, 13 | |

TECHNICAL FIELDS SEARCHED (IPC)

G06V

The present search report has been drawn up for all claims

| Place of search | Date of completion of the search | Examiner |
|---|---|---|
| The Hague | 1 November 2024 | Loza, Artur |

EPO FORM 1503 03.82 (P04C01)